# EUROPÄISCHE PATENTSCHRIFT

(11) **EP 0 779 185 B1**
(45) Veröffentlichungstag und Bekanntmachung des Hinweises auf die Patenterteilung: **08.10.2003**
(21) Anmeldenummer: 96118686.3
(22) Anmeldetag: 21.11.1996
(51) Int. Cl.: B60R 21/20

(54) **Gassack-Abdeckung für ein Fahrzeuginsassen-Rückhaltesystem sowie Verfahren zu deren Herstellung**
Airbag cover for a vehicle passenger restraint system and method for the manufacture thereof
Recouvrement de sac gonflable pour système de retenue de passager de véhicule et son procédé de fabrication

(30) Priorität: 13.12.1995 DE 19546585
(43) Veröffentlichungstag der Anmeldung: 18.06.1997
(73) Patentinhaber: TRW Occupant Restraint Systems GmbH & Co. KG, 73551 Alfdorf (DE)
(72) Erfinder: Nusshör, Bernd, 73565 Spraitbach (DE)
(74) Vertreter: Sulzbach, Werner, Dipl.-Chem. Dr.

(56) Entgegenhaltungen:
- EP-A- 0 586 222
- EP-A- 0 588 176
- EP-A- 0 629 527
- EP-A- 0 711 627
- EP-A- 0 749 872
- GB-A- 2 254 618
- US-A- 5 110 647
- PATENT ABSTRACTS OF JAPAN vol. 095, no. 011, 26. Dezember 1995 (1995-12-26) & JP 07 228211 A (TOYODA GOSEI CO LTD), 29. August 1995 (1995-08-29) & US 5 499 842 A (TOYODA GOSEI CO LTD) 19. April 1996 (1996-04-19)

## Beschreibung

Die Erfindung betrifft eine Gassack-Abdeckung für ein Fahrzeuginsassen-Rückhaltesystem mit einer in die Innenseite der Abdeckung bis zu einer vorbestimmten Restwandstärke eingebrachten Reißlinie, wobei die Abdeckung als Hauptbestandteil eine oder mehrere miteinander in Verbund gebrachte Schichten aus einem Material aufweist, welches aus der aus den Elastomerlegierungen eines thermoplastischen Polymers mit einem unvernetzten, teilvernetzten oder vollvernetzten EPDM-Terpolymer, den Blockcopolymeren von alternierenden Polyesterund Polyetherblöcken sowie den Blockcopolymeren von Polystyrol und Polyolefinen bestehenden Gruppe ausgewählt ist, wobei die Restwandstärke über den wesentlichen Teil des Reißlinienverlaufs 0,3 bis 1,0 mm beträgt, und wobei sich die Reißlinie, ausgehend von der Innenseite der Abdeckung, in Richtung auf deren Außenseite, stetig verjüngt. Die Erfindung betrifft weiter ein Verfahren zur Herstellung einer derartigen Gassack-Abdeckung.

Eine gattungsgemäße Gassack-Abdeckung ist aus der EP 0 558 176 A2 bekannt. Gassack-Abdeckungen dieser Art werden heutzutage mit Hilfe von Spritzguß- oder anderen Formverfahren für Kunststoffe hergestellt. Die Abdekkungen sind an ihrer Innenseite mit einer sogenannten Reißlinie versehen, die bei der Aktivierung des Gassacks als Sollbruchstelle wirkt und das Aufklappen der Abdeckung ermöglicht. Dadurch kann der sich ausdehnende Gassack austreten und einen Aufprall des Fahrzeuginsassen auf die Lenkradsäule, die Armaturentafel oder die Windschutzscheibe verhindern.

Die Reißlinie wird gewöhnlich bereits bei der Herstellung der Abdeckung mit Hilfe einer speziellen Kontur im Spritzguß- oder Schäumwerkzeug eingebracht. Um einen sicheren Herstellungsprozeß zu gewährleisten, wird je nach Abdekkungswerkstoff eine Mindestrestwandstärke benötigt. Diese gewährleistet darüber hinaus auch die Festigkeit und Formhaltigkeit der Abdeckung im eingebauten Zustand. Andererseits ist aber auch eine relativ kleine Restwandstärke erwünscht, um im Falle eines Unfalls ein sicheres Aufspringen der Abdeckung durch den sich entfaltenden Gassack zu gewährleisten. Eine zu dünne Restwandstärke führt aber bei im Spritzgußverfahren hergestellten Abdeckungen zur Abzeichnung der Reißlinienkontur auf der Innenseite der Abdeckung.

Aus der DE-OS 4409405 ist ein Verfahren zur Herstellung einer Airbagabdekkung bekannt, die eine innere Formschicht aus relativ hartem Polymermaterial und eine äußere Schicht aus relativ weichem Polymermaterial aufweist. Die Abdeckung wird zunächst mit Hilfe eines üblichen Formverfahrens hergestellt. Danach wird eine Reißlinie in die Abdeckung geschnitten, und zwar unter Verwendung einer Schneidetechnik, die keinen Druck auf die Abdeckung ausübt. Zu diesem Zweck wird insbesondere ein Laser, ein Ultraschallmesser oder ein heißes Messer verwendet. Der Schnitt wird so ausgeführt, daß er die innere Formschicht vollständig durchdringt und vorzugsweise etwa 1 mm in die äußere Schicht aus relativ weichem Polymermaterial eindringt. Die Reißlinie ist dabei etwa 0,3 mm breit. Die innere Formschicht ist etwa 2 mm und die äußere Formschicht etwa 5 mm dick.

Bei einer derartig aufgebauten Abdeckung besteht das Problem, daß eine sichere Funktion der Abdeckung über die Lebensdauer des Kraftfahrzeugs hinweg nicht immer gewährleistet ist.

In der EP 0 586 222 A2 ist eine Airbagabdeckung mit einer in die Abdeckung eingebrachten Reißlinie dargestellt. Die Abdeckung besteht aus einer Schicht aus einem Material aus der Gruppe der thermoplastischen Elastomere. Die Restwandstärke über dem wesentlichen Teil des Reißlinienverlaufs beträgt zwischen 0,5 und 1,0 mm.

Die EP 0 629 527 A2 zeigt eine einstückig gegossene Kunststoffabdeckung für ein Airbagsystem mit einer Reißleine in der Innenseite der Abdeckung, wobei die Restwandstärke über dem wesentlichen Teil des Reißlinienverlaufs zwischen 0,4 und 1,1 mm beträgt. Die Reißline verjüngt sich dabei ausgehend von der Innenseite der Abdeckung in Richtung auf deren Außenseite stetig.

Die GB-2 254 618 A beschreibt eine Gassack-Abdeckung mit einer in die Innenfläche eingebrachten Reißlinie, die aus einem polefinischen oder styrolartigen thermoplastischen Elastomer mit einer definierten Härte hergestellt ist. Das Elastomer kann ein Copolymer aus Styrol und konjugierten Dienen bzw. ein hydriertes Derivat dieses Blockcopolymers sein, oder ein Copolymerkautschuk aus Ethylen mit einem C3-C6-Alpha-Olefin und einem weichem Polymer als Matrix.

Die JP-A-07228211 offenbart eine Gassack-Abdeckung mit einer annähernd H-förmigen Reißlinie, wobei die Abdeckung aus einem thermoplastischen Elastomer gebildet ist.

Die Erfindung stellt demgegenüber eine gattungsgemäße Abdeckung bereit, die dadurch gekennzeichnet ist, daß die Breite der Reißlinie etwa 120 bis 190 µm beträgt, jeweils gemessen an der Innenseite der Abdeckung.

Die Elastomerlegierung aus dem thermoplastischen Polymer und dem EPDM-Terpolymer besteht im wesentlichen aus zwei Phasen, einer aus dem thermoplastischen Polymer gebildeten Hartphase und einer Weichphase aus EPDM-Terpolymer (Ethylen-Propylen-Dien-Kautschuk). Das thermoplastische Polymer ist vorzugsweise Polypropylen.

Bei der Herstellung der nachfolgend auch mit "TPE-O" bezeichneten Elastomerlegierung werden kleine Elastomerpartikel aus EPDM-Terpolymer gleichmäßig fein dispers in einer Matrix aus dem thermoplastischen Polymer verteilt, wobei das EPDM-Terpolymer unvernetzt vorliegt. Die nachfolgend auch mit "TPE-V" bezeichnete Elastomerlegierung besteht aus den gleichen Bestandteilen wie die Elastomerlegierung TPE-O, allerdings liegt hier die Weichphase aus EPDM-Terpolymer in der Thermoplastmatrix teil- bzw. vollvernetzt vor. Unter "vollvernetzt" wird dabei ein Vernetzungsgrad von über 95 % verstanden, unter "teilvernetzt" ein Vernetzungsgrad von bis zu 95 %, vorzugsweise von 90 - 95 %.

Die Herstellung der Elastomerlegierung TPE-V erfolgt durch intensives Vermischen der Ausgangskomponenten unter Zusatz von Vernetzungsmitteln, vorzugsweise durch dynamische Vulkanisation, wobei die EPDM-Phase während des Misch- und Dispergierprozesses "in situ" vernetzt wird. Durch diese Technik lassen sich die Eigenschaften der Elastomerlegierung, insbesondere über den Anteil, den Vernetzungsgrad und die Verteilung der EPDM-Weichphase, nahezu maßgeschneidert steuern.

Als Materialien für die Airbag-Abdeckung eignen sich erfindungsgemäß außerdem die nachfolgend mit "TPE-E" bezeichneten Blockcopolymere, die aus alternierenden harten Polyesterblöcken und weichen Polyetherblöcken aufgebaut sind. Die Polyesterblöcke sind dabei aus Diolen, vorzugsweise 1,4-Butandiol, und Dicarbonsäuren, vorzugsweise Terephthalsäure, gebildet. Zur Herstellung der Blockcopolymere werden die Polyesterblöcke mit langkettigen, endständige Hydroxylgruppen tragenden Polyethern verestert.

Die nachfolgend auch mit "TPE-S" bezeichneten Blockcopolymere von Polystyrol und Polyolefinen sind durch ihren Dreiblock-Aufbau aus zwei thermoplastischen Polystyrol-Endblöcken und einem elastomeren Mittelblock aus Polyolefin gekennzeichnet. Vorzugsweise werden als TPE-S die StyrolButadien-Styrol-Blockcopolymere, Styrol-Isopren-Styrol-Blockcopolymere oder Styrol-Ethylen-Butylen-Styrol-Blockcopolymere sowie deren hydrierte Derivate verwendet. In diesen "TPE-S"-Blockcopolymeren bilden die harten Polystyrolsegmente Bereiche mit einheitlicher Stoffcharakteristik (Domänen) aus, die als räumliche, physikalische Vernetzungsstellen für die flexiblen, weichen Polyolefinsegmente wirken.

Die erfindungsgemäße Abdeckung weist darüber hinaus eine Reißlinie auf, in deren Bereich die Restwandstärke über den wesentlichen Teil des Reißlinienverlaufs zwischen 0,3 und 1 mm beträgt. Eine Restwandstärke unterhalb 0,3 mm verursacht Festigkeitsprobleme der Abdeckung über die Lebensdauer des Kraftfahrzeugs und kann zu einem vorzeitigen bzw. unbeabsichtigten Öffnen der Abdeckung führen. Eine Restwandstärke oberhalb 1,0 mm erschwert den Öffnungsvorgang und vergrößert die beim Austreten des Gassacks auf die übrigen Teile der Abdeckung, insbesondere den Scharnierbereich, wirkende Belastung. Vorzugsweise ist die Restwandstärke im Bereich des an den Scharnierbereich der Abdeckung angrenzenden Reißlinienauslaufs erhöht, um einen definierten Reißstop zu erhalten. Darüber hinaus wird bevorzugt, daß die Restwandstärke in vorbestimmten Bereichen des Reißlinienverlaufs verringert ist, und dort einen definierten Reißstart zu erhalten und das Anreißen zu erleichtern. Die Festlegung dieser vorbestimmten Bereiche erfolgt in Abhängigkeit von der gewünschten Reißlinienkontur und der Positionierung des Gassacks.

Ein weiteres Merkmal der erfindungsgemäßen Abdeckung besteht darin, daß sich die Reißlinie, ausgehend von der Innenseite der Abdeckung, in Richtung auf die Außenseite bzw. Sichtseite, stetig verjüngt. Vorzugsweise ist die Reißlinie im Querschnitt näherungsweise gaußförmig. Diese Ausgestaltung des Reißlinienquerschnitts gewährleistet, daß das Aufreißen der Abdeckung genau entlang der definierten Sollbruchlinie erfolgt.

Die Breite der Reißlinie beträgt 120 bis 190 µm, besonders bevorzugt etwa 150 µm, jeweils gemessen an der Innenseite der Abdeckung. Die niedrige Reißlinienbreite gewährleistet, daß das Aufreißen der Abdeckung genau an der vordefinierten Stelle erfolgt. Außerdem wird so eine Abzeichnung der Reißlinie auf der Sichtseite der Abdeckung vollständig verhindert.

Die Einstellung einer derart geringen Reißlinienbreite ist mit Hilfe des konventionellen Spritzgußverfahrens nicht möglich. Gegenstand der Erfindung ist daher auch ein Verfahren zur Herstellung einer Gassack-Abdeckung, bei dem die Reißlinie unter Verwendung eines Lasers eingebracht wird. Vorzugsweise wird ein CO₂-Laser verwendet. Der CO₂-Laser zeichnet sich insbesondere durch eine hohe Intensität des erzeugten Laserstrahls und die günstige Wellenlänge von 10,6 µm aus, bei der eine sehr gute Absorption durch die zu schneidenden Kunststoff-Materialien erfolgt. Des weiteren weist der CO₂-Laser einen hohen Wirkungsgrad von 15 bis 20 % auf und benötigt dabei nur eine geringe Kühlleistung.

Erfindungsgemäß wird der Laser in der sogenannten "Monomode"-Einstellung betrieben. In dieser Einstellung weist der von dem Laser erzeugte Lichtstrahl ein näherungsweise gaußförmiges Energieprofil auf, d.h. die Energiestromdichte oder Intensität des Laserstrahls ist in dessen Mitte überhöht. Im Vergleich dazu ist die Intensität des Laserstrahls in der sogenannten "Multimode"-Einstellung an allen Punkten des Strahlquerschnitts nahezu gleich. Durch den Betrieb des Lasers in der "Monomode"-Einstellung werden eine bessere Fokussierbarkeit und höhere Schnittgeschwindigkeiten erreicht.

Die erfindungsgemäße Kombination von ausgewählten Kunststoff-Materialien für die Gassack-Abdeckung, einer definierten Restwandstärke und einer bestimmten Reißlinienform gewährleistet eine optimale Funktionssicherheit der Abdeckung über die gesamte Lebensdauer des Kraftfahrzeugs hinweg und wirkt einer durch häufige Temperaturwechsel verursachten vorzeitigen Versprödung der Abdeckung im Reißlinienbereich entgegen.

Weitere Merkmale und Vorteile der Erfindung ergeben sich aus der folgenden Beschreibung von besonderen Ausführungsformen unter Bezugnahme auf die beigefügte Zeichnung. In der Zeichnung zeigen:
- Fig. 1: einen Querschnitt durch eine Zweikomponenten-GassackAbdeckung; und
- Fig. 2: einen Teilquerschnitt durch eine Einkomponenten-Gassack-Abdeckung im Bereich der Reißlinie.

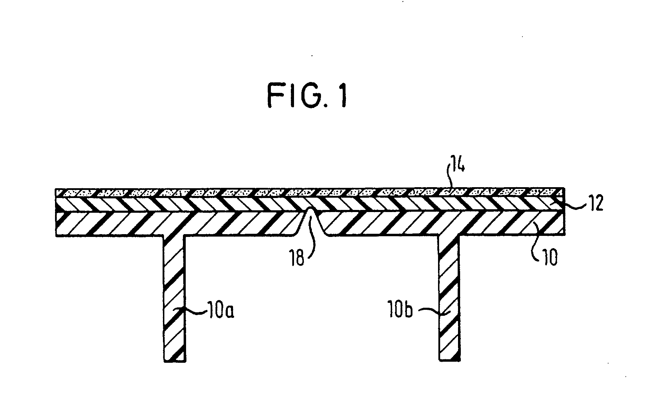

Die in Fig. 1 gezeigte Gassack-Abdeckung umfaßt als Hauptbestandteil eine Kernschicht 10 sowie eine außenseitige, mit der Kernschicht in Verbund gebrachte Deckschicht 12 von etwas geringerer Dicke. Beide Schichten 10, 12 werden in eine Form gespritzt, wobei zugleich an die Schicht 10 innenseitige Stützen 10a, 10b angespritzt werden. Die Stützen dienen zur Befestigung der Abdeckung an einer Lenkradnabe bzw. an einem Armaturenbrett. Die Deckschicht 12 ist darüber hinaus mit einer Beschichtung 14 aus einem Zweikomponenten-Urethan-Lacksystem versehen, das aus einem Haftvermittler und einem Decklack besteht. Dieses Lacksystem zeichnet sich durch eine ausgezeichnete Kratz- und Abriebbeständigkeit aus und ergibt ein besonders angenehmes, weiches Berührungsempfinden.

In die Abdeckung ist erfindungsgemäß eine hier vergrößert dargestellte Reißlinie 18 eingebracht. Diese Reißlinie erstreckt sich vorzugsweise ganz durch die Kernschicht 10 sowie teilweise durch die außenseitige Deckschicht 12. Je nach den für die Deckschicht bzw. Kernschicht verwendeten Materialien kann die Reißlinie aber auch nur die Kernschicht, ganz oder teilweise, durchtrennen. Das Einbringen der Reißlinie 18 erfolgt vorzugsweise mit Hilfe eines CO₂-Lasers, der in der "Monomode"-Einstellung betrieben wird, wobei der von dem Laser erzeugte Brennfleck einen Durchmesser (Focusdurchmesser) von etwa 120 bis 190 µm, vorzugsweise etwa 150 µm, bei einer Divergenz von bis zu etwa 5 mrad aufweist. Bei dieser Einstellung des Lasers besitzt die in die Abdeckung eingebrachte Reißlinie im Querschnitt näherungsweise die Form einer Gaußkurve.

Die Kernschicht 10 der in Fig. 1 gezeigten Abdeckung besteht im wesentlichen aus einem Material, welches aus der aus den Elastomerlegierungen eines thermoplastischen Polymers und eines unvernetzten bzw. eines teil- oder vollvernetzten EPDM-Terpolymers sowie den Blockcopolymeren von aus alternierenden Polyester- und Polyetherblöcken bestehenden Gruppe ausgewählt ist. Die Deckschicht 12 kann aus der Elastomerlegierung des thermoplastischen Polymers und des teil- bzw. vollvernetzten EPDM-Terpolymers, aus den Blockcopolymeren von Polystyrol und Polyolefin sowie aus den Blockcopolymeren von alternierenden Polyester- und Polyetherblöcken gebildet sein. Als thermoplastisches Polymer wird bevorzugt Polypropylen verwendet.

Die Dicke der Kernschicht liegt vorzugsweise im Bereich zwischen etwa 2 und 4 mm, die Dicke der Deckschicht zwischen etwa 1 und 3 mm. Die Kernschicht ist vorzugsweise härter als die Deckschicht.

Gemäß einer ersten Ausführungsform ist das Material der Kernschicht aus der Elastomerlegierung eines thermoplastischen Polymers und eines unvernetzten EPDM-Terpolymers (TPE-O) und das Material der Deckschicht aus einem Blockcopolymer von Polystyrol-Endblöcken und einem elastomeren Polyolefin-Mittelblock (TPE-S) gebildet. Bei einer derartig aufgebauten Abdeckung beträgt die Restwandstärke der in die Abdeckung eingebrachten Reißlinie über den wesentlichen Teil des Reißlinienverlaufs etwa 0,5 bis 1,0 mm.

Bei einer weiteren Ausführungsform der in Fig. 1 gezeigten Zweikomponenten-Abdeckung ist das Material der Kernschicht 10 aus der Elastomerlegierung eines thermoplastischen Polymers und eines unvernetzten EPDM-Terpolymers (TPE-O) und das Material'der Deckschicht aus einer Elastomerlegierung aus thermoplastischem Polymer und teil- bzw. vollvernetztem EPDM-Terpolymer (TPE-V) gebildet. Bei einer derartig aufgebauten Abdeckung beträgt die Restwandstärke vorzugsweise etwa 0,5 bis 1,0 mm.

Bei einer weiteren Ausführungsform der in Fig. 1 gezeigten Abdeckung ist sowohl das Material der Kernschicht 10 als auch der Deckschicht 12 aus der Elastomerlegierung eines thermoplastischen Polymers und eines teil- oder vollvernetzten EPDM-Terpolymers (TPE-V) von jeweils unterschiedlicher Härte gebildet. In diesem Fall beträgt die Restwandstärke vorzugsweise etwa 0,5 bis 0,8 mm. Schließlich kann das Material der Kernschicht 10 und der Deckschicht 12 aus dem Blockcopolymer von alternierenden Polyester- und Polyetherblöcken gebildet sein. In diesem Fall beträgt die Restwandstärke vorzugsweise etwa 0,3 bis 0,5 mm.

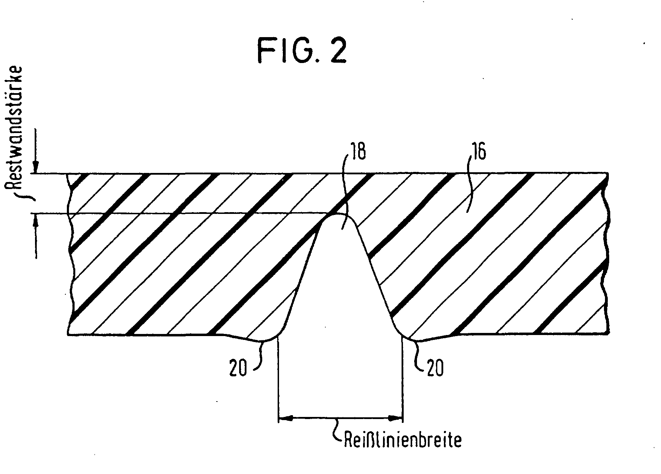

Fig. 2 zeigt einen Teilquerschnitt durch die den Hauptbestandteil der Einkomponenten-Abdeckung bildende Schicht 16 im Bereich einer Reißlinie 18. Das Einbringen der Reißlinie 18 erfolgt durch Schneiden der Innenseite der Abdeckung 16 mit Hilfe eines Lasers. Die Reißlinienbreite entspricht im wesentlichen dem Focusdurchmesser des erzeugten Laserstrahls und liegt, gemessen an der Innenseite der Abdeckung, vorzugsweise zwischen etwa 120 und 190 µm. Aufgrund der Verwendung eines Lasers zum Einbringen der Reißlinie 18 weist diese an ihrem der Innenseite der Abdeckung zugewandten Rand kleine Überhöhungen 20 auf, die bei der Ermittlung der Reißlinienbreite nicht berücksichtigt werden. Die hier gezeigte Reißlinie 18 ist im Querschnitt näherungsweise gaußförmig. Die Wandstärke im Bereich der Reißlinie 18 (Restwandstärke) beträgt zwischen etwa 0,3 und 1 mm. Die Dicke der Schicht 16 liegt vorzugsweise im Bereich zwischen 2 und 4 mm. Auch die Einkomponenten-Abdeckung 16 kann an ihrer Außenseite mit einem Decklack zur Verbesserung des Berührungsempfindens versehen sein.

Die den Hauptbestandteil der Einkomponenten-Abdeckung gemäß Fig. 2 bildende Schicht 16 besteht vorzugsweise aus einem Material, welches aus der aus den Elastomerlegierungen eines thermoplastischen Polymers und eines unvernetzten, teilvernetzten oder vollvernetzten EPDM-Terpolymers oder den Blockcopolymeren von alternierenden Polyester- und Polyetherblöcken bestehenden Gruppe ausgewählt ist.

Vorzugsweise ist das Material der Schicht 16 die Elastomerlegierung eines thermoplastischen Polymers und eines unvernetzten EPDM-Terpolymers (TPE-O), wobei die Restwandstärke etwa 0,5 bis 1,0 mm beträgt.

Das Material der Schicht 16 kann ferner die Elastomerlegierung eines thermoplastischen Polymers und eines teiloder vollvernetzten EPDM-Terpolymers (TPE-V) sein. Bei einer solchen Abdeckung beträgt die Restwandstärke vorzugsweise etwa 0,5 bis 0,8 mm.

Schließlich kann das Material der Schicht 16 auch ein Blockcopolymer von alternierenden Polyester- und Polyetherblöcken (TPE-E) sein, wobei die Restwandstärke etwa 0,3 bis 0,5 mm beträgt.

Die erfindungsgemäße Abdeckung wird zunächst mit Hilfe eines bekannten Spritzgußverfahrens hergestellt. Da das Einbringen der Reißlinie in einem späteren Verfahrensschritt erfolgt, kann die Anordnung einer speziellen Kontur im Spritzgußwerkzeug entfallen. Somit ist ein einfacherer Werkzeugaufbau möglich. Außerdem werden die durch ein schlechtes Füllen der Form verursachten Wanddickensprünge sowie Abzeichnungen der Reißlinie auf der Sichtseite der Abdeckung vermieden.

Nach dem Spritzgießen wird die Reißlinie von der Innenseite der Abdeckung aus mittels eines Lasers bis zu einer vorbestimmten Restwandstärke eingebracht. Die Verwendung des Lasers ermöglicht eine schnelle und einfache Modifikation der Restwandstärke und des Reißlinienverlaufs, ohne eine aufwendige Änderung des Spritzgußwerkzeuges notwendig zu machen. Vorzugsweise wird ein CO₂-Laser verwendet, der in der sogenannten "Monomode-Einstellung" betrieben wird. Bei dieser Einstellung ist die Energiestromdichte bzw. Intensität des vom Laser erzeugten Strahls in der Mitte des Strahlquerschnitts höher als an dessen Rändern, wobei die Intensitätsverteilung näherungsweise die Form einer Gaußkurve annimmt. Die "Monomode-Einstellung" besitzt den Vorteil, daß eine hohe Schnittgeschwindigkeit und eine schärfere Fokussierung möglich ist. Hierdurch wird die Erzeugung kleiner und kleinster Reißlinienbreiten ermöglicht. Der von dem Laser erzeugte Laserstrahl besitzt vorzugsweise einen Focusdurchmesser von etwa 120 bis 190 µm, besonders bevorzugt etwa 150 µm, bei einer Divergenz von bis zu etwa 5 mrad.

## Patentansprüche

1. Gassackabdeckung für ein Fahrzeuginsassenrückhaltesystem mit einer in die Innenseite der Abdeckung bis zu einer vorbestimmten Restwandstärke eingebrachten Reißlinie (18), wobei die Abdeckung als Hauptbestandteil eine oder mehrere miteinander in Verbindung gebrachte Schichten (10, 12, 16) aus einem Material aufweist, welches aus der aus den Elastomerlegierungen eines thermoplastischen Polymers mit einem unvernetzten, teilvernetzten oder vollvernetzten EPDM-Terpolymer, den Blockcopolymeren von alternierenden Polyester- und Polyetherblöcken sowie den Blockcopolymeren von Polystyrol und Polyolefinen bestehenden Gruppe ausgewählt ist, wobei die Restwandstärke über den wesentlichen Teil des Reißlinienverlaufs 0,3 bis 1,0 mm beträgt, und wobei sich die Reißlinie (18), ausgehend von der Innenseite der Abdeckung, in Richtung auf deren Außenseite, stetig verjüngt, **dadurch gekennzeichnet, daß** die Reißlinie (18), gemessen an der Innenseite der Abdeckung, zwischen etwa 120 und 190 µm breit ist.

2. Abdeckung nach Anspruch 1, **dadurch gekennzeichnet, daß** die Reißlinie (18) im Querschnitt näherungsweise gaußlinienförmig ist.

3. Abdeckung nach einem der Ansprüche 1 oder 2, **dadurch gekennzeichnet, daß** die Abdeckung als Hauptbestandteil eine Schicht (16) aus einem Material aufweist, welches aus der aus Elastomerlegierung eines thermoplastischen Polymers mit einem unvernetzten, teilvernetzten oder vollvernetzten EPDM-Terpolymer und Blockcopolymeren von alternierenden Polyester- und Polyetherblöcken bestehenden Gruppe ausgewählt ist.

4. Abdeckung nach Anspruch 3, **dadurch gekennzeichnet, daß** das Material eine Elastomerlegierung aus einem thermoplastischen Polymer und einem unvernetzten EPDM-Terpolymer ist und die Restwandstärke 0,5 bis 1,0 mm beträgt.

5. Abdeckung nach Anspruch 3, **dadurch gekennzeichnet, daß** das Material eine Elastomerlegierung aus einem thermoplastischen Polymer und einem teiloder vollvernetzten EPDM-Terpolymer ist und die Restwandstärke 0,5 bis 0,8 mm beträgt.

6. Abdeckung nach Anspruch 3, **dadurch gekennzeichnet, daß** das Material ein Blockcopolymer von alternierenden Polyester- und Polyetherblöcken ist und die Restwandstärke 0,3 bis 0,5 mm beträgt.

7. Abdeckung nach Anspruch 1 oder 2, **dadurch gekennzeichnet, daß** die Abdeckung als Hauptbestandteil wenigstens eine innenliegende Kemschicht (10) und eine an die Kernschicht angeformte Deckschicht (12) aufweist.

8. Abdeckung nach Anspruch 7, **dadurch gekennzeichnet, daß** das Material der Kernschicht (10) die Elastomerlegierung des thermoplastischen Polymers und des unvernetzten EPDM-Terpolymers und das Material der Deckschicht (12) das Blockcopolymer von Polystyrol und einem Polyolefin ist und die Restwandstärke 0,5 bis 1,0 mm beträgt.

9. Abdeckung nach Anspruch 7, **dadurch gekennzeichnet, daß** das Material der Kernschicht (10) die Elastomerlegierung des thermoplastischen Polymers und des unvernetzten EPDM-Terpolymers und das Material der Deckschicht (12) die Elastomerlegierung aus thermoplastischem Polymer und teil- bzw. vollvernetztem EPDM-Terpolymer ist und die Restwandstärke 0,5 bis 1,0 mm beträgt.

10. Abdeckung nach Anspruch 7, **dadurch gekennzeichnet, daß** das Material der Kernschicht (10) und der Deckschicht (12) aus einer Elastomerlegierung eines thermoplastischen Polymers und eines teil- oder vollvernetzten EPDM-Terpolymers gebildet ist und die Restwandstärke 0,5 bis 0,8 mm beträgt.

11. Abdeckung nach Anspruch 7, **dadurch gekennzeichnet, daß** das Material der Kernschicht (10) und der Deckschicht (12) aus einem Blockcopolymer von alternierenden Polyester- und Polyetherblöcken gebildet ist und die Restwandstärke 0,3 bis 0,5 mm beträgt.

12. Abdeckung nach einem der vorhergehenden Ansprüche, **dadurch gekennzeichnet, daß** das thermoplastische Polymer Polypropylen ist.

13. Abdeckung nach einem der vorhergehenden Ansprüche, **dadurch gekennzeichnet, daß** die Restwandstärke im Bereich des Reißlinienauslaufs erhöht ist.

14. Abdeckung nach einem der vorhergehenden Ansprüche, **dadurch gekennzeichnet, daß** die Restwandstärke in einem vorbestimmten Bereich des Reißlinienverlaufs erniedrigt ist.

15. Verfahren zur Herstellung der Abdeckung gemäß den Ansprüchen 1 bis 14, **dadurch gekennzeichnet, daß** die Reißlinien (18) mit Hilfe eines Lasers in die Innenseite der Abdeckung eingebracht wird, wobei mit dem Laser ein gebündelter Laserstrahl mit einer in der Mitte des Strahlquerschnitts überhöhten Energiedichte erzeugt wird.

16. Verfahren nach Anspruch 15, **dadurch gekennzeichnet, daß** als Laser ein CO₂-Laser verwendet wird.

17. Verfahren nach Anspruch 15 oder 16, **dadurch gekennzeichnet, daß** der von dem Laser erzeugte Laserstrahl einen Focusdurchmesser von etwa 120 bis 190 µm bei einer Divergenz von bis zu etwa 5 mrad aufweist.

## Claims

1. A gas bag cover for a vehicle occupant restraint system, comprising a tear line (18) incorporated into the inner side of the cover as far as to a predetermined residual wall thickness, the cover having, as the main component thereof, one or more layers (10, 12, 16) connected with each other of a material selected from the group consisting of the elastomer alloys of a thermoplastic polymer with a non-cross-linked, partly cross-linked or fully cross-linked EPDM terpolymer, of the block copolymers of alternating polyester and polyether blocks and of the block copolymers of polystyrene and polyolefins, the residual wall thickness amounting to between 0.3 and 1.0 mm along the major part of the course of the tear line, and the tear line (18), starting from the inner side of the cover, steadily tapering towards the outer side thereof, **characterized in that** the tear line (18), as measured at the inner side of the cover, has a width of between approximately 120 and 190 µm.

2. The cover as claimed in claim 1, **characterized in that** in cross-section the tear line (18) is approximately in the form of a Gaussian curve.

3. The cover as claimed in either one of claims 1 or 2, **characterized in that** as the main component thereof, the cover comprises a layer (16) of a material selected from the group consisting of elastomer alloys of a thermoplastic polymer with a non-cross-linked, partly cross-linked or fully cross-linked EPDM terpolymer and of block copolymers of alternating polyester and polyether blocks.

4. The cover as claimed in claim 3, **characterized in that** the material is an elastomer alloy made up of a thermoplastic polymer and a non-cross-linked EPDM terpolymer and **in that** the residual wall thickness amounts to between 0.5 and 1.0 mm.

5. The cover as claimed in claim 3, **characterized in that** the material is an elastomer alloy made up of a thermoplastic polymer and a partly or fully cross-linked EPDM terpolymer and **in that** the residual wall thickness amounts to between 0.5 and 0.8 mm.

6. The cover as claimed in claim 3, **characterized in that** the material is a block copolymer of alternating polyester and polyether blocks and **in that** the residual wall thickness amounts to between 0.3 and 0.5 mm.

7. The cover as claimed in claim 1 or 2, **characterized in that** as the main component thereof, the cover comprises at least one internally placed core layer (10) and a cover layer (12) molded on the core layer.

8. The cover as claimed in claim 7, **characterized in that** the material of the core layer (10) is the elastomer alloy of the thermoplastic polymer and of the non-cross-linked EPDM terpolymer and the material of the cover layer (12) is the block copolymer of polystyrene and a polyolefin and **in that** the residual wall thickness amounts to between 0.5 and 1.0 mm.

9. The cover as claimed in claim 7, **characterized in that** the material of the core layer (10) is the elastomer alloy of the thermoplastic polymer and of the non-cross-linked EPDM terpolymer and the material of the cover layer (12) is the elastomer alloy of thermoplastic polymer and partly or, respectively, fully cross-linked EPDM terpolymer and **in that** the residual wall thickness amounts to between 0.5 and 1.0 mm.

10. The cover as claimed in claim 7, **characterized in that** the material of the core layer (10) and of the cover layer (12) is formed of an elastomer alloy of a thermoplastic polymer and a partly or fully cross-linked EPDM terpolymer and **in that** the residual wall thickness amounts to between 0.5 and 0.8 mm.

11. The cover as claimed in claim 7, **characterized in that** the material of the core layer (10) and of the cover layer (12) is formed of a block copolymer of alternating polyester and polyether blocks and **in that** the residual wall thickness amounts to between 0.3 and 0.5 mm.

12. The cover as claimed in any one of the preceding claims, **characterized in that** the thermoplastic polymer is polypropylene.

13. The cover as claimed in any one of the preceding claims, **characterized in that** the residual wall thickness is increased in the region of the end of the tear line.

14. The cover as claimed in any one of the preceding claims, **characterized in that** the residual wall thickness is reduced in a predetermined region of the course of the tear line.

15. A method for the production of the cover as claimed in claims 1 to 14, **characterized in that** the tear line (18) is incorporated into the inner side of the cover with the aid of a laser, the laser producing a collimated laser beam with an elevated energy density in the middle of the cross-section of the beam.

16. The method as claimed in claim 15, **characterized in that** a CO₂ laser is used as said laser.

17. The method as claimed in claim 15 or 16, **characterized in that** the laser beam produced by the laser has a focus diameter of approximately 120 to 190 µm at a divergence of up to approximately 5 mrad.

## Revendications

1. Couvercle de coussin à gaz pour un système de retenue des occupants d'un véhicule, comportant une ligne de déchirure (18) pratiquée dans la face intérieure du couvercle jusqu'à une épaisseur restante prédéterminée de la paroi, le couvercle comprenant comme composant principal une ou plusieurs couches (10, 12, 16) reliées entre elles et réalisées dans un matériau choisi dans le groupe composé des alliages élastomères d'un polymère thermoplastique avec un terpolymère EPDM non réticulé, partiellement réticulé ou entièrement réticulé, des copolymères blocs de polyester et de polyéther alternés ainsi que des copolymères blocs de polystyrène et de polyoléfines, l'épaisseur restante de la paroi sur la majeure partie du tracé de la ligne de déchirure étant comprise entre 0,3 et 1,0 mm, et la ligne de déchirure (18) se rétrécissant de manière continue à partir de la face intérieure du couvercle en direction de la face extérieure de celui-ci, **caractérisé en ce que** la ligne de déchirure (18), mesurée sur la face intérieure du couvercle, présente une largeur comprise entre environ 120 et 190 µm.

2. Couvercle selon la revendication 1, **caractérisé en ce que** la ligne de déchirure (18) présente, en coupe transversale, approximativement la forme d'une courbe de Gauss.

3. Couvercle selon l'une des revendications 1 ou 2, **caractérisé en ce que** le couvercle comprend comme composant principal une couche (16) réalisée dans un matériau choisi parmi le groupe composé d'alliages élastomères d'un polymère thermoplastique avec un terpolymère EPDM non réticulé, partiellement réticulé ou entièrement réticulé, et de copolymères blocs de polyester et de polyéther alternés.

4. Couvercle selon la revendication 3, **caractérisé en ce que** le matériau est un alliage élastomère composé d'un polymère thermoplastique et d'un terpolymère EPDM non réticulé, et l'épaisseur restante de la paroi est comprise entre 0,5 et 1,0 mm.

5. Couvercle selon la revendication 3, **caractérisé en ce que** le matériau est un alliage élastomère composé d'un polymère thermoplastique et d'un terpolymère EPDM partiellement ou entièrement réticulé, et l'épaisseur restante de la paroi est comprise entre 0,5 et 0,8 mm.

6. Couvercle selon la revendication 3, **caractérisé en ce que** le matériau est un copolymère bloc de polyester et de polyéther alternés, et l'épaisseur restante de la paroi est comprise entre 0,3 et 0,5 mm.

7. Couvercle selon la revendication 1 ou 2, **caractérisé en ce que** le couvercle comprend comme composant principal au moins une couche de base (10) intérieure et une couche de revêtement (12) façonnée sur la couche de base.

8. Couvercle selon la revendication 7, **caractérisé en ce que** le matériau de la couche de base (10) est l'alliage élastomère du polymère thermoplastique et du terpolymère EPDM non réticulé, et le matériau de la couche de revêtement (12) est le copolymère bloc de polystyrène et d'une polyoléfine, et l'épaisseur restante de la paroi est comprise entre 0,5 et 1,0 mm.

9. Couvercle selon la revendication 7, **caractérisé en ce que** le matériau de la couche de base (10) est l'alliage élastomère du polymère thermoplastique et du terpolymère EPDM non réticulé, et le matériau de la couche de revêtement (12) est l'alliage élastomère constitué du polymère thermoplastique et d'un terpolymère EPDM partiellement ou entièrement réticulé, et l'épaisseur restante de la paroi est comprise entre 0,5 et 1,0 mm.

10. Couvercle selon la revendication 7, **caractérisé en ce que** le matériau de la couche de base (10) est formé par un alliage élastomère d'un polymère thermoplastique et d'un terpolymère EPDM partiellement ou entièrement réticulé, et l'épaisseur restante de la paroi est comprise entre 0,5 et 0,8 mm.

11. Couvercle selon la revendication 7, **caractérisé en ce que** le matériau de la couche de base (10) et de la couche de revêtement (12) est formé par un copolymère bloc de blocs de polyester et de polyéther alternés, et l'épaisseur restante de la paroi est comprise entre 0,3 et 0,5 mm.

12. Couvercle selon l'une des revendications précédentes, **caractérisé en ce que** le polymère thermoplastique est du polypropylène.

13. Couvercle selon l'une des revendications précédentes, **caractérisé en ce que** l'épaisseur restante de la paroi est augmentée dans la zone de la fin de la ligne de déchirure.

14. Couvercle selon l'une des revendications précédentes, **caractérisé en ce que** l'épaisseur restante est diminuée dans une zone prédéterminée du tracé de la ligne de déchirure.

15. Procédé de fabrication du couvercle selon les revendications 1 à 14, **caractérisé en ce que** la ligne de déchirure (18) est réalisée à l'aide d'un laser dans la face intérieure du couvercle, le laser produisant un rayon laser en faisceau avec une densité d'énergie plus élevée au centre de la section transversale du rayon.

16. Procédé selon la revendication 15, **caractérisé en ce que** le laser utiliser est un laser à CO₂.

17. Procédé selon la revendication 15 ou 16, **caractérisé en ce que** le rayon laser produit par le laser présente un diamètre focal d'environ 120 à 190 µm pour une divergence pouvant atteindre environ 5 mard.
